## Europäisches Patentamt

## European Patent Office

## Office européen des brevets

(11) Veröffentlichungsnummer: **0 198 379**

**B1**

(12) **EUROPÄISCHE PATENTSCHRIFT**

(45) Veröffentlichungstag der Patentschrift:
29.06.88

(21) Anmeldenummer: **86104705.8**

(22) Anmeldetag: **07.04.86**

(51) Int. Cl.⁴: **B 25 J 15/04**

(54) Greifvorrichtung mit auswechselbarer Greiferbacke.

(30) Priorität: **15.04.85 DE 3513453**

(43) Veröffentlichungstag der Anmeldung:
**22.10.86 Patentblatt 86/43**

(45) Bekanntmachung des Hinweises auf die Patenterteilung:
**29.06.88 Patentblatt 88/26**

(84) Benannte Vertragsstaaten:
**AT BE CH DE FR GB IT LI NL SE**

(56) Entgegenhaltungen:
**EP-A-0 120 275**
**EP-A-0 162 187**
**DE-A-3 426 892**
**GB-A-2 130 550**

(73) Patentinhaber: **Traub AG, Ulmer Strasse 49- 55,
D-7313 Reichenbach/Fils (DE)**

(72) Erfinder: **Wiesner, Franz, Hopfenweg 5, D-7311
Owen/Teck (DE)**
Erfinder: **Etzel, Horst, Herderweg 1, D-7311
Hochdorf (DE)**

(74) Vertreter: **Wuesthoff, Franz, Dr.- Ing.,
Patentanwälte Wuesthoff -v. Pechmann-
Behrens- Goetz Schweigerstrasse 2, D-8000
München 90 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Greifvorrichtung, insbesondere für Handhabungsautomaten, bei der mindestens ein tragendes Kupplungsteil mit einer auswechselbaren Greiferbacke kuppelbar ist durch eine Kupplung mit
- einer Kupplungsöffnung und einer quer dazu angeordneten Riegelöffnung im tragenden Kupplungsteil oder in der Greiferbacke,
- einem Kupplungsstecker, der von der Greiferbacke oder vom tragenden Kupplungsteil wegragt, in die Kupplungsöffnung einsteckbar ist und eine seitliche Aussparung aufweist,
- einem Riegel, der in einer Sperrstellung in die Riegelöffnung und die Aussparung zugleich eingreift und dadurch den Kupplungsstecker in der Kupplungsöffnung verriegelt,
- wobei Greiferbacke, Kupplungsstecker und Riegel in der Sperrstellung durch eine Federanordnung miteinander verspannt sind,
- und der Riegel eine Angriffsfläche für eine äußere Kraft aufweist, durch die er in eine Lösestellung bewegbar ist, in der sich der Kupplungsstecker aus der Kupplungsöffnung herausziehen läßt.

Bei einer bekannten Greifvorrichtung dieser Gattung (DE 33 06 510 A1) ist die Federanordnung in Längsrichtung der Riegelöffnung, also quer zum Kupplungsstecker, vorgespannt und ständig bestrebt, den Riegel in seine Sperrstellung zu drücken. Die Greiferbacke kann in Bezug auf den Kupplungsstecker nur dann eine genau vorbestimmte Lage einnehmen, wenn der Riegel in der Riegelöffnung der Greiferbacke und in der seitlichen Aussparung des Kupplungssteckers spiel frei geführt ist, eine Bedingung, die sich in der Praxis auf Dauer nicht einhalten läßt. Der Kupplungsstecker weist zwar einen schulterartigen Ansatz auf, an dem die Greiferbacke anliegen soll; die Federanordnung kann aber, wenn überhaupt, nur eine im Verhältnis zu ihrer Vorspannung geringe Kraft auf die Greiferbacke in Richtung zum Ansatz des Kupplungssteckers ausüben. Zum Herausziehen des Kupplungssteckers aus der Greiferbacke läßt sich der Riegel mit einem stangenförmigen Werkzeug gegen den Widerstand der Federanordnung in seine Lösestellung drücken. Wenn der Kupplungsstecker zur erneuten Benutzung der Greiferbacke wieder in deren Kupplungsöffnung eingesteckt worden ist, läßt sich mit der üblichen Steuerung der Greifvorrichtung nicht feststellen, ob der Riegel wieder in seine Sperrstellung gelangt ist oder sich etwa in seiner Lösestellung verklemmt hat. Es besteht deshalb die Gefahr, daß die Greiferbacke benutzt wird, ohne sicher mit dem Kupplungsstecker verriegelt zu sein.

Der Erfindung liegt die Aufgabe zugrunde, eine Greifvorrichtung der eingangs beschriebenen Gattung derart weiterzubilden, daß ihre mindestens eine auswechselbare Greiferbacke mittels einer Steuerung, wie sie für solche Greifervorrichtungen üblich ist, zuverlässig und in genauer Lagezuordnung zum Kupplungsstecker mit diesem verriegelbar und wieder von ihm lösbar ist.

Die Aufgabe ist erfindungsgemäß dadurch gelöst, daß
- die Federanordnung in Längsrichtung des Kupplungssteckers spannbar ist,
- der Riegel eine der genannten Angriffsfläche gegenüberliegende zweite Angriffsfläche für eine äußere Kraft aufweist, durch die er in die Sperrstellung bewegbar ist,
- der Riegel ferner eine Keilfläche aufweist, die bei seiner Bewegung in die Sperrstellung mit einer am Kupplungsstecker ausgebildeten Begrenzungsfläche seiner Aussparung zusammenwirkt und die Federanordnung spannt, und
- im Arbeitsbereich der Greiferbacke eine Backenablage angeordnet ist, gegen die der Riegel wahlweise mit seiner ersten oder zweiten Angriffsfläche drückbar ist.

Damit wird erreicht, daß der Kupplungsstecker in die zugehörige Greiferbacke eingesteckt werden kann, ohne daß die Federanordnung Widerstand leistet. Erst wenn der Kupplungsstecker seine vorbestimmte Endstellung in Bezug auf die Greiferbacke erreicht hat, wird der Riegel aus der Lösestellung in die Sperrstellung verschoben. Zu diesem Zweck kann die Greifvorrichtung mit Antriebsmitteln, die ihr ohnehin in bekannter Weise zugeordnet sind, derart bewegt werden, daß die erfindungsgemäße zweite Angriffsfläche des Riegels gegen die Backenablage stößt. Während der Riegel auf diese Weise in seine Sperrstellung gelangt, entsteht in der Federanordnung eine in Längsrichtung des Kupplungssteckers wirksame Spannung, welche die Greiferbacke in einer Stellung hält, die beispielsweise durch eine Anschlagfläche am tragenden Kupplungsteil festgelegt ist.

Die erfindungsgemäße Greifvorrichtung eignet sich besonders für Handhabungsautomaten (Roboter) und hat im allgemeinen zwei Greiferbacken, die jeweils ein Werkstück von einer Bearbeitungsstation zur nächsten transportieren. Darüber hinaus eignet sich die erfindungsgemäße Greifvorrichtung auch für den Transport von Werkzeugen sowie zum Festhalten von Werkstücken oder Werkzeugen während einer Bearbeitung. So kann die erfindungsgemäße Greifvorrichtung beispielsweise ähnlich einem Dreibackenfutter mit drei Greiferbacken zum Spannen eines Werkstücks an einem Drehautomaten ausgestaltet sein. In all diesen Fällen kann es genügen, wenn eine von zwei oder mehr zusammenwirkenden Greiferbacken in der erfindungsgemäßen Weise auswechselbar ist; in anderen Fällen sind sämtliche Greiferbacken der Greifvorrichtung auswechselbar.

Die Federanordnung ist vorzugsweise zwischen dem tragenden Kupplungsteil, in dem der Kupplungsstecker in seiner Längsrichtung verschiebbar geführt ist, und einem Kopf des Kupplungssteckers angeordnet. Es ist aber auch möglich, daß der Kupplungsstecker mit dem tragenden Kupplungsteil starr verbunden und die Federanordnung zwischen der auswechselbaren Greiferbacke und dem Riegel angeordnet ist. Eine weitere Alternative besteht darin, daß der Kupplungsstecker an der auswechselbaren Greiferbacke befestigt und der Riegel im tragenden Kupplungsteil geführt ist.

Es ist ferner zweckmäßig, wenn am tragenden Kupplungsteil oder an der auswechselbaren Greiferbacke parallel zum Kupplungsstecker mindestens ein Kegelstift befestigt ist, dem eine komplementäre Zentriervorrichtung an der Greiferbacke bzw. am tragenden Kupplungsteil zugeordnet ist. In diesem Fall kann der Kupplungsstecker mit nennenswertem Spiel in die Kupplungsöffnung eingreifen, da er nicht für die Positionierung der auswechselbaren Greiferbacke in Bezug auf das tragende Kupplungsteil zu sorgen, sondern nur die Kraft der Federanordnung zu übertragen hat. Für die genaue Positionierung der Greiferbacke in bezug auf das tragende Kupplungsteil können auch andere bekannte Mittel vorgesehen sein, beispielsweise komplementäre Plan-Kerbverzahnungen, die auch als Hirth-Zahnkupplungen bekannt sind.

Es ist vorteilhaft, wenn der Riegel in seiner Keilfläche eine Vertiefung aufweist, in die ein Fuß des Kupplungssteckers einrastbar ist. Dadurch ergibt sich in der Sperrstellung des Riegels ein Formschluß, der den Riegel besonders zuverlässig gegen unbeabsichtigte Verschiebung sichert.

Die Greiferbacke kann mindestens eine Rastvorrichtung enthalten, die bestrebt ist, den Riegel in seiner Lösestellung festzuhalten.

Unabhängig davon kann die Greiferbacke mindestens eine Rastvorrichtung enthalten, die bestrebt ist, den Riegel in seiner Sperrstellung festzuhalten.

Die Backenablage weist zweckmäßigerweise oberhalb einer Ablagefläche eine frei auskragende, in die Riegelöffnung passende Halteplatte auf, mit der sich der Riegel in die Lösestellung verschieben läßt.

Die beiden im vorstehenden beschriebenen Maßnahmen können gemeinsam dadurch weitergebildet sein, daß die Halteplatte mindestens eine Vertiefung aufweist, in welche die der Sperrstellung des Riegel zugeordnete Rastvorrichtung einrastbar ist, wenn der Riegel in die Lösestellung verschoben ist.

Die Backenablage kann einen der Halteplatte gegenüberliegenden Anschlag aufweisen, gegen den der Riegel mit seiner zweiten Angriffsfläche drückbar ist, um in die Sperrstellung verschoben zu werden.

Wenn die Greifvorrichtung zwei auswechselbare Greiferbacken aufweist, dann ist es zweckmäßig, daß die Backenablage eine zweiseitig frei auskragende Halteplatte und beiderseits davon je eine Ablagefläche für eine Greiferbacke und je einen Anschlag für die zweite Angriffsfläche des zugehörigen Riegels aufweist.

Ein Ausführungsbeispiel der Erfindung wird im folgenden anhand schematischer Zeichnungen mit weiteren Einzelheiten beschrieben. Es zeigt:

Fig. 1 eine Greifvorrichtung in Seitenansicht und teilweise im Schnitt I-I in Fig. 2,

Fig. 2 den Schnitt II-II in Fig. 1,

Fig. 3 den Schnitt III-III in Fig. 1 und

Fig. 4 eine der Fig. 1 ähnliche Seitenansicht der Greifvorrichtung in einer anderen Betriebsstellung.

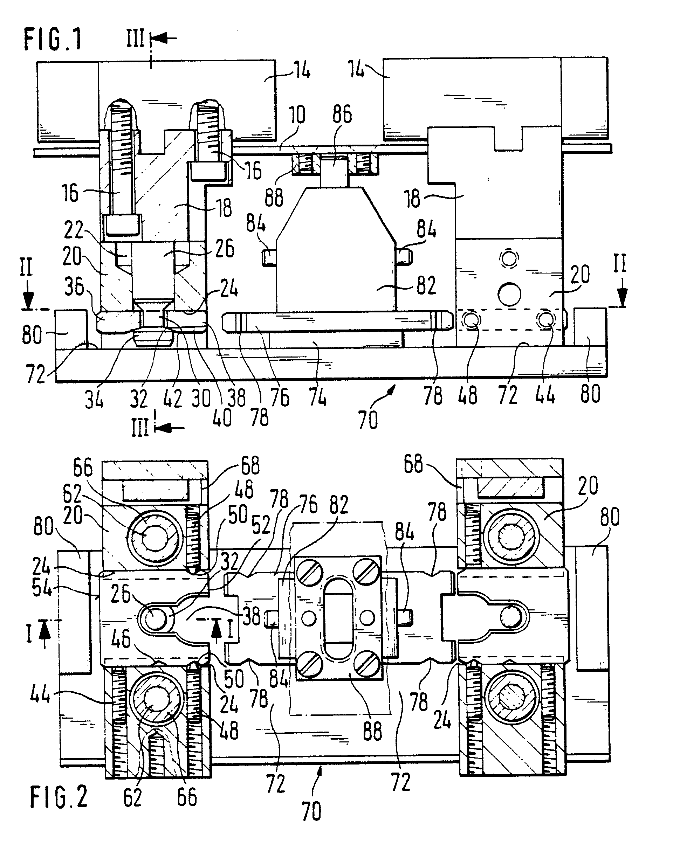

Die dargestellte Greifvorrichtung hat ein nur teilweise angedeutetes Greifergehäuse 10 mit einem Paar paralleler Führungen 12, an denen zwei Grundbacken 14 verschiebbar geführt sind. Das Greifergehäuse 10 enthält ferner einen nicht dargestellten Antrieb bekannter Art, beispielsweise einen elektrischen Servomotor, mit dem die Grundbacken über ein ebenfalls nicht dargestelltes, bekanntes Getriebe gegenläufig bewegbar sind. Das Getriebe kann beispielsweise aus einer Gewindespindel mit zwei gegenläufigen Gewinden und zugehörigen Muttern bestehen, wobei die Gewinde gleiche oder ungleiche Steigungen aufweisen können, jenachdem ob die Grundbacken 14 um gleiche oder ungleiche Strecken bewegt werden sollen. An je der der beiden Grundbacken 14 ist mit Schrauben 16 ein tragendes Kupplungsteil 18 befestigt, das aus dem Greifergehäuse 10 herausragt, im dargestellten Beispiel nach unten. Wenn hier und im folgenden von unten und oben die Rede ist, so bezieht sich dies auf die Darstellung in Fig. 1, 3 und 4; in Wirklichkeit kann die dargestellte Greifvorrichtung jede beliebige Lage im Raum einnehmen. Mit jedem der beiden tragenden Kupplungsteile 18 ist eine auswechselbare Greiferbacke 20 mittels einer Kupplung gekuppelt, die im folgenden näher beschrieben wird.

Zu jeder der beiden Kupplungen gehören eine gemäß Fig. 1, 3 und 4 senkrechte Kupplungsöffnung 22 von kreisförmigem Querschnitt und eine quer dazu angeordnete Riegelöffnung 24 von rechteckigem Querschnitt, die beide in der betreffenden Greiferbacke 20 ausgebildet sind. In der Kupplungsöffnung 22 ist ein Kupplungsstecker 26 verschiebbar geführt, der als im wesentlichen zylindrischer Bolzen ausgebildet ist. Der Kupplungsstecker 26 hat an seinem oberen Ende einen Kopf 28 und in der Nähe seines unteren Endes eine seitliche Aussparung 30 in Gestalt einer Ringnut mit einer kegelförmigen Begrenzungsfläche 32, an die sich ein Fuß 34 anschließt.

In der Riegelöffnung 24 ist ein flacher, im wesentlichen rechteckiger Riegel 36 geführt, in den von einer seiner Schmalseiten aus ein Schlitz 38 eingearbeitet ist. Der Schlitz 38 hat im Bereich seines Endes eine Breite, die nur wenig größer als der Durchmesser des Kupplungsteckers 26 im Bereich der Aussparung 30 ist; nach außen hin erweitert sich der Schlitz 38 auf eine Breite, die etwas größer als der Durchmesser des Fußes 34 ist. An der Unterseite des Riegels 36 ist eine Keilfläche 40 derart ausgebildet, daß die Dicke des Riegels sich zu derjenigen Schmalseite hin vermindert, von welcher der Schlitz 38 ausgeht. Rings um das Ende des Schlitzes 38 ist an der Unterseite des Riegels 36 eine im wesentlichen kegelförmige Vertiefung 42 ausgebildet, in die der Fuß 34 mit seiner oberen Begrenzungsfläche 32 einrasten kann.

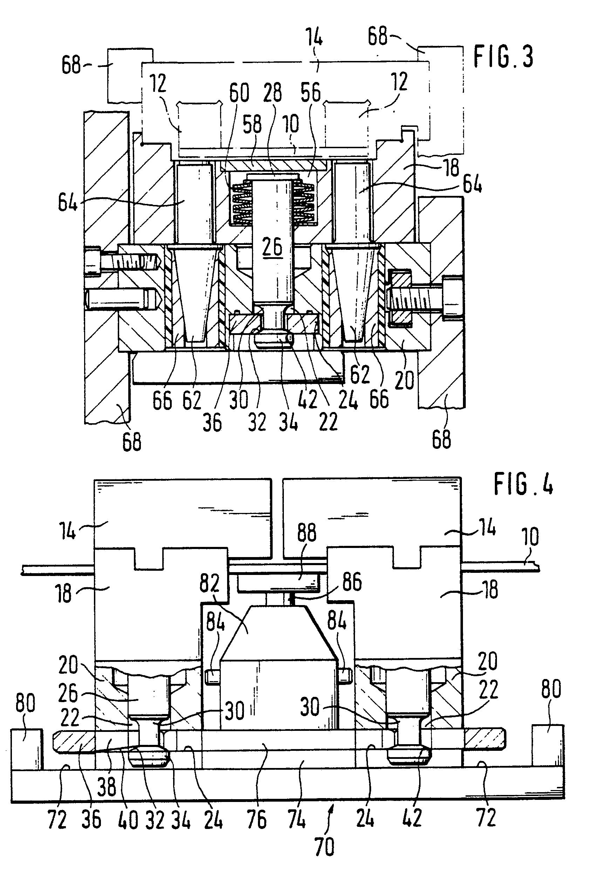

Die in je einer der beiden Greiferbacken 20 angeordneten Riegel 36 sind in Fig. 1 bis 3 in einer Sperrstellung abgebildet, in der sie verhindern, daß der zugehörige Kupplungsstecker 26 nach oben aus der zugehörigen Greiferbacke 20 herausgezogen wird. In Fig. 4 ist jeder der beiden Riegel 36 hingegen in einer Lösestellung abgebildet, in welcher der zugehörige Kupplungsstecker 26 durch die Erweiterung des Schlitzes 38 nach oben herausgezogen werden kann.

In jeder der beiden Greiferbacken 20 ist eine federnde Rastvorrichtung 44 angeordnet, die in eine Kerbe 46 des zugehörigen Riegels 36 einrastet, wenn dieser seine Lösestellung einnimmt. Ferner sind in jeder der beiden Greiferbacken 20 zwei Rastvorrichtungen 48 angeordnet, die in je eine Kerbe 50 des zugehörigen Riegels 36 einrasten, wenn dieser seine Sperrstellung einnimmt.

Jeder der beiden Riegel 36 hat ferner eine dem anderen Riegel zugewandte Angriffsfläche 52 für Kräfte in Richtung zur Lösestellung und eine vom anderen Riegel abgewandte Angriffsfläche 54 für Kräfte in Richtung zur Sperrstellung; diese Angriffsflächen sind im dargestellten Beispiel von den beiden Stirnseiten des Riegels gebildet.

Jedes der beiden tragenden Kupplungsteile 18 hat einen von oben her eingearbeiteten zylindrischen Hohlraum 56, der nach oben hin durch einen aufgeschraubten Deckel 58 abgeschlossen ist. In dem Hohlraum 56 sind der Kopf 28 und der angegrenzende Teil des zugehörigen Kupplungssteckers 26 sowie eine Federanordnung 60 untergebracht. Die Federanordnung 60 ist im dargestellten Beispiel ein Tellerfederpaket, das zwischen dem Kopf 28 des Kupplungssteckers 26 und einem Absatz des Hohlraumes 56 angeordnet ist. Der Kupplungsstecker 26 ist gegen den Widerstand der Federanordnung 60 in Bezug auf das tragende Kupplungsteil 18 nach unten verschiebbar und ist in der Sperrstellung des zugehörigen Riegels 36 gespannt gehalten, wodurch Greiferbacke 20 und Kupplungsteil 18 zusammengespannt sind.

Der Kupplungsstecker 26 hat in Bezug auf das Kupplungsteil 18 und die Greiferbacke 20 ausreichendes radiales Spiel, sodaß er sich nicht verklemmen kann. Für die erforderliche genaue Positionierung jeder der beiden auswechselbaren Greiferbacken 20 in Bezug auf das zugehörige Kupplungsteil 18 sorgt ein Paar Kegelstifte 62, die mit je einem an ihnen ausgebildeten zylindrischen Zapfen 64 im zugehörigen Kupplungsteil 18 befestigt sind, beispielsweise durch Ausgießen mit Kunstharz. Jeder der beiden Kegelstifte 62 greift in eine Zentriervorrichtung 66 ein, die als innen kegelförmige und außen zylindrische Büchse ausgebildet und in der zugehörigen Greiferbacke 20 befestigt ist, im dargestellten Beispiel ebenfalls durch Ausgießen mit Kunstharz.

An jeder der beiden Greiferbacken 20 ist mindestens ein Greiferfinger 68 befestigt, der in üblicher Weise an die Form eines zur Handhabung vorgesehenen Werkstücks oder Werkzeugs angepaßt und zusammen mit der zugehörigen Greiferbacke 20 auswechselbar ist. Wenn es nicht erforderlich ist, die Greiferfinger 68 auswechselbar anzuordnen, so können die tragenden Kupplungsteile 18 samt auswechselbaren Greiferbacken 20 entfernt und die Greiferfinger 68 unmittelbar an den Grundbacken 14 befestigt werden.

Zum Auswechseln und Aufbewahren der Greiferbacken 20 können mehrere vorzugsweise ortsfest angeordnete Backenablagen 70 vorhanden sein, von denen eine dargestellt ist. Sie hat zwei Ablageflächen 72 für je eine Greiferbacke 20 und einen dazwischen angeordneten Sockel 74, auf dem eine Halteplatte 76 derart befestigt ist, daß sie oberhalb jeder der beiden Ablageflächen über den Sockel auskragt. Die Halteplatte 76 hat an jedem ihrer beiden auskragenden Enden ein Paar seitliche Vertiefungen 78. Jedem dieser beiden Enden steht in einem Abstand, der größer ist als die Länge jedes der beiden Riegel 36, ein ebenfalls zur Backenablage 70 gehöriger Anschlag 80 gegenüber.

Auf der Halteplatte 76 ist mittig ein Aufsatz 82 befestigt, von dem zwei seitliche Zapfen 84 in den gleichen Richtungen wie die Halteplatte 76 wegragen und ein oberer Zapfen 86 mittig nach oben ragt. Dem oberen Zapfen 86 ist eine Zentrierplatte 88 zugeordnet, die mittig ausgespart und an der Unterseite des Greifergehäuses 10 befestigt ist.

Wenn die beiden Greiferbacken 20 ausgewechselt werden sollen, werden sie gemäß Fig. 1 bis 3 auf den beiden Ablageflächen 72 abgesetzt und anschließend durch eine Schließbewegung der Greifvorrichtung soweit zueinander hin bewegt, bis sie gegen je einen der beiden seitlichen Zapfen 84 stoßen. Dabei dringen die beiden Enden der Halteplatte 76 in je eine der beiden Riegelöffnungen 24 ein, stoßen gegen die Angriffsfläche 52 des zugehörigen Riegels 36 und verschieben diesen aus der Sperrstellung gemäß Fig. 1 bis 3 in die Lösestellung gemäß Fig. 4. Die beiden Rastvorrichtungen 48 jeder Greiferbacke 20 rasten in die beiden Vertiefungen 78 am zugehörigen Ende der Halteplatte 76 ein, wodurch die Greiferbacken unverschiebbar auf der Backenablage 70 festgehalten werden. Anschließend wird das Greifergehäuse 10 samt Grundbacken 14 aufwärts bewegt, sodaß die Kupplungsstecker 26 und Kegelstifte 62 sich von den beiden Greiferbacken 20 lösen.

Bei Bedarf wird das Greifergehäuse 10 über einer anderen Backenablage 70 abgesenkt, die mit der dargestellten übereinstimmt, jedoch Greiferbacken 20 mit anderen Greiferfingern 68 trägt. Sobald die Kupplungsstecker 26 in die Kupplungsöffnungen 22 dieser Greiferbacken 20 eingedrungen sind und zugleich die Kegelstifte 62 in die Zentriervorrichtungen 66 eingedrungen sind, werden sie durch eine Öffnungsbewegung der Greifvorrichtung auseinander bewegt, wobei sie auf ihren Ablageflächen 72 von der Halteplatte 76 weg verschoben werden und jeder der beiden Riegel 36 mit seiner Angriffsfläche 54 gegen den zugehörigen Anschlag 80 stößt. Dadurch werden die Riegel 36 aus ihrer Lösestellung in ihre Sperrstellung verschoben, wobei sie mit ihrer Keilfläche 40 den Fuß 34 des zugehörigen Kupplungssteckers 26 nach unten ziehen und dadurch die zugehörige Federanordnung 60 spannen. Die auf diese Weise an den tragenden Kupplungsteilen 18 befestigten Greiferbacken 20 werden dann durch eine geringfügige Schließbewegung der Greifvorrichtung von den Anschlägen 80 wegbewegt, ohne jedoch die Halteplatte 76 zu erreichen. Aus dieser Stellung heraus, die in Fig. 1 bis 3 abgebildet ist, kann die Greifvorrichtung aufwärts bewegt werden, um mit den ausgewechselten Greiferbacken 20 zu arbeiten.

**Patentansprüche**

1. Greifvorrichtung, insbesondere für Handhabungsautomaten, bei der mindestens ein tragendes Kupplungsteil (18) mit einer auswechselbaren Greiferbacke (20) kuppelbar ist durch eine Kupplung mit
- einer Kupplungsöffnung (22) und einer quer dazu angeordneten Riegelöffnung (24) im tragenden Kupplungsteil (18) oder in der Greiferbacke (20),
- einem Kupplungsstecker (26), der von der Greiferbacke (20) oder vom tragenden Kupplungsteil (18) wegragt, in die Kupplungsöffnung (22) einsteckbar ist und eine seitliche Aussparung (30) aufweist,
- einem Riegel (36), der in einer Sperrstellung in die Riegelöffnung (24) und die Aussparung (30) zugleich eingreift und dadurch den Kupplungsstecker (26) in der Kupplungsöffnung (22) verriegelt,
- wobei Greiferbacke (20), Kupplungsstecker (26) und Riegel (36) in der Sperrstellung durch eine Federanordnung (60) miteinander verspannt sind,
- und der Riegel (36) eine Angriffsfläche (52) für eine äußere Kraft aufweist, durch die er in eine Lösestellung bewegbar ist, in der sich der Kupplungsstecker (26) aus der Kupplungsöffnung (22) herausziehen läßt,
dadurch gekennzeichnet, daß
- die Federanordnung (60) in Längsrichtung des Kupplungssteckers (26) spannbar ist,

- der Riegel (36) eine der genannten Angriffsfläche (52) gegenüberliegende zweite Angriffsfläche (54) für eine äußere Kraft aufweist, durch die er in die Sperrstellung bewegbar ist,
- der Riegel (36) ferner eine Keilfläche (40) aufweist, die bei seiner Bewegung in die Sperrstellung mit einer am Kupplungsstecker (26) ausgebildeten Begrenzungsfläche (32) seiner Aussparung (30) zusammenwirkt und die Federanordnung (60) spannt, und
- im Arbeitsbereich der Greiferbacke (20) eine Backenablage (70) angeordnet ist, gegen die der Riegel (36) wahlweise mit seiner ersten oder zweiten Angriffsfläche (52, 54) drückbar ist.

2. Greifvorrichtung nach Anspruch 1, dadurch gekennzeichnet, daß die Federanordnung (60) zwischen dem tragenden Kupplungsteil (18), in dem der Kupplungsstecker (26) in seiner Längsrichtung verschiebbar geführt ist, und einem Kopf (28) des Kupplungssteckers angeordnet ist.

3. Greifvorrichtung nach Anspruch 1 oder 2, dadurch gekennzeichnet, daß am tragenden Kupplungsteil (18) oder an der auswechselbaren Greiferbacke (20) parallel zum Kupplungsstecker (26) mindestens ein Kegelstift (62) befestigt ist, dem eine komplementäre Zentriervorrichtung (66) an der Greiferbacke (20) bzw. am tragenden Kupplungsteil (18) zugeordnet ist.

4. Greifvorrichtung nach einem der Ansprüche 1 bis 3, dadurch gekennzeichnet, daß der Riegel (36) in seiner Keilfläche (40) eine Vertiefung (42) aufweist, in die in der Sperrstellung ein Fuß (34) des Kupplungssteckers (26) einrastbar ist.

5. Greifvorrichtung nach einem der Ansprüche 1 bis 4, dadurch gekennzeichnet, daß die Greiferbacke (20) mindestens eine Rastvorrichtung (44) enthält, die bestrebt ist, den Riegel (36) in seiner Lösestellung festzuhalten.

6. Greifvorrichtung nach einem der Ansprüche 1 bis 5, dadurch gekennzeichnet, daß die Greiferbacke (20) mindestens eine Rastvorrichtung (48) enthält, die bestrebt ist, den Riegel (36) in seiner Sperrstellung festzuhalten

7. Greifvorrichtung nach einem der Ansprüche 1 bis 6, dadurch gekennzeichnet, daß die Backenablage (70) oberhalb einer Ablagefläche (72) eine frei auskragende, in die Riegelöffnung (24) passende Halteplatte (76) aufweist, mit der sich der Riegel (36) in die Lösestellung verschieben läßt.

8. Greifvorrichtung nach Anspruch 7 in Verbindung mit Anspruch 6, dadurch gekennzeichnet, daß die Halteplatte (76) mindestens eine Vertiefung (78) aufweist, in welche die der Sperrstellung des Riegels (36) zugeordnete Rastvorrichtung (48) einrastbar ist, wenn der Riegel (36) in die Lösestellung verschoben ist.

9. Greifvorrichtung nach Anspruch 7 oder 8, dadurch gekennzeichnet, daß die Backenablage (70) einen der Halteplatte (76) gegenüberliegenden Anschlag (80) aufweist, gegen den der Riegel (36) mit seiner zweiten Angriffsfläche (54) drückbar ist, um in die Sperrstellung verschoben zu werden.

10. Greifvorrichtung nach Anspruch 9, mit zwei auswechselbaren Greiferbacken (20), dadurch gekennzeichnet, daß die Backenablage (70) eine zweiseitig frei auskragende Halteplatte (76) und beiderseits davon je eine Ablagefläche (72) für eine Greiferbacke (20) und je einen Anschlag (80) für die zweite Angriffsfläche (54) des zugehörigen Riegels (36) aufweist.

**Claims**

1. A gripper, especially for automatic handling machines with which at least one supporting coupling member (18) is adapted to be coupled to an exchangeable gripping jaw (20) by means of a coupling comprising

-a coupling opening (22) and a locking member opening (24) disposed transversely thereof in the supporting coupling member (18) or in the gripping jaw (20),

- a coupling plug (26) extending away from the gripping jaw (20) or the supporting coupling member (18), being insertable in the coupling opening (22) and having a lateral recess (30),

- a locking member (36) engaging in the locking member opening (24) and in the recess (30) at the same time when in a locking position, thereby locking the coupling plug (26) in the coupling opening (22),

- the gripping jaw (20), coupling plug (26), and locking member (36) being clamped together by a spring assembly (60) in the locking position,

- and the locking member (36) having a surface (52) for application of an external force by which it is movable into a release position at which the coupling plug (26) can be pulled out of the coupling opening (22),

characterized in that

- the spring assembly (60) is adapted to be tensioned in longitudinal direction of the coupling plug (26),

- the locking member (36) has a second surface (54) opposite the surface (52) mentioned for application of an external force by which it is movable into the locking position, - the locking member (36) further has a wedge surface (40) which cooperates with a limiting surface (32) of the recess (30) formed at the coupling plug (26) to clamp the spring assembly (60) when the locking member is moved into the locking position, and

- a jaw deposit (70) is arranged within the operating range of the gripping jaw (20) against which deposit the locking member (36) is adapted to be pressed selectively by its first or second surface (52, 54) for application of a force.

2. The gripper as claimed in claim 1, characterized in that the spring assembly (60) is arranged between the supporting coupling member (18) in which the coupling plug (26) is guided to slide in its longitudinal direction and a head (28) of the coupling plug.

3. The gripper as claimed in claim 1 or 2, characterized in that at least one conical pin (62) is fixed to the supporting coupling member (18) or to the exchangeable gripping jaw (20) in parallel with the coupling plug (26), a complementary centering device (66) being associated with the same at the griping jaw (20) or at the supporting coupling member (18).

4. The gripper as claimed in one of claims 1 to 3, characterized in that the locking member (36) has a depression (42) in its wedge surface (40) in which depression a foot (34) of the coupling plug (26) is adapted to be caught in the locking position.

5. The gripper as claimed in one of claims 1 to 4, characterized in that the gripping jaw (20) includes at least one catch (44) tending to keep the locking member (36) in its release position.

6. The gripper as claimed in one of claims 1 to 5, characterized in that the gripping jaw (20) includes at least one catch (48) tending to keep the locking member (36) in its locking position.

7. The gripper as claimed in one of claims 1 to 6, characterized in that the jaw deposit (70) comprises a latch plate (76) jutting out freely above a setting-down surface (72) and fitting into the locking member opening (24) and adapted to displace the locking member (36) into the release position.

8. The gripper as claimed in claim 7 as combined with claim 6, characterized in that the latch plate (76) comprises at least one depression (78) in which the catch (48) associated with the locking position of the locking member (36) is adapted to be caught when the locking member (36) has been displaced into the release position.

9. The gripper as claimed in claim 7 or 8, characterized in that the jaw deposit (70) comprises a stop (80) which is disposed opposite the latch plate (76) and against which the locking member (36) is adapted to be pressed by its second surface (54) for application of a force in order to be displaced into locking position

10. The gripper as claimed in claim 9, comprising two exchangeable gripping jaws (20), characterized in that the jaw deposit (70) comprises a latch plate (76) jutting out freely at two sides and at either side thereof a setting-down surface (72) each for a gripping jaw (20) and a stop (80) each for the second surface (54) for application of a force of the corresponding locking member.

**Revendications**

1. Dispositif de préhension, en particulier pour robots manipulateurs, dans lequel au moins une partie porteuse d'accouplement (18) peut être accouplée à une mâchoire de pince interchangeable (20), par un accouplement qui comprend :

- une ouverture d'accouplement (22) et une ouverture de passage (24) de verrou disposée transversalement à la première, et ménagée dans la partie porteuse d'accouplement (18) ou dans la mâchoire de pince ;

- un élément mâle d'accouplement (26), qui fait saillie sur la mâchoire de pince (20) ou sur la partie porteuse d'accouplement (18), peut être enfoncé dans l'ouverture (22) de l'accouplement et présente un évidement latéral (30) ;

- un verrou (36) qui, dans une position de blocage est engagé dans l'ouverture de passage de verrou (24) et en même temps dans l'évidement (30), et de cette façon, verrouille l'élément mâle (26) de l'accouplement dans l'ouverture (22) de l'accouplement ;

- dans lequel la mâchoire (20) de la pince, l'élément mâle (26) de l'accouplement et le verrou (36) sont serrés les uns sur les autres dans la position de blocage par un dispositif élastique (60) ; et

- le verrou (36) présente une surface d'attaque (52) destinée à recevoir une force extérieure, sous l'effet de laquelle il peut venir se placer dans une position de déblocage, dans laquelle l'élément mâle (26) de l'accouplement peut se dégager de l'ouverture (22) de l'accouplement, caractérisé en ce que :

- le dispositif élastique (60) peut être contraint dans la direction longitudinale de l'élément mâle (26) de l'accouplement ;

- le verrou (36) présente une deuxième surface d'attaque (54), placée en face de la surface d'attaque précitée (52), et destinée à recevoir une force extérieure sous l'effet de laquelle il peut être amené à la position de blocage ;

- le verrou (36) présente en outre une surface inclinée (40) qui, lorsque le verrou vient prendre sa position de blocage, coopère avec une surface limite (32) de son ouverture (30), qui est formée sur l'élément mâle (26) de l'accouplement, et contraint le dispositif élastique (60) ; et

- il est prévu un support de mâchoire (70), situé dans la région de travail de la mâchoire (20) de la pince et contre lequel le verrou (36) peut être pressé sélectivement au moyen de sa première ou de sa deuxième surface d'attaque (52, 54).

2. Dispositif de préhension selon la revendication 1, caractérisé en ce que le dispositif élastique (60) est interposé entre la partie porteuse (18) de l'accouplement, dans laquelle l'élément mâle (26) est guidé pour coulisser dans sa direction longitudinale, et une tête (28) de l'élément mâle d'accouplement.

3. Dispositif de préhension selon la revendication 1 ou 2, caractérisé en ce que, sur la partie porteuse (18) de l'accouplement, ou sur la mâchoire de pince interchangeable (20) est fixée, parallèlement à l'élément mâle (26) de l'accouplement, au moins une broche conique (62) à laquelle est associé un dispositif de centrage complémentaire (66) prévu sur la mâchoire de pince (20) ou sur la partie porteuse (18) de l'accouplement.

4. Dispositif de préhension selon une des revendications 1 à 3, caractérisé en ce que le verrou (36) présente dans sa surface inclinée (40), un évidement (42) dans lequel un pied (34) de l'élément mâle (26) de l'accouplement peut se verrouiller dans la position de blocage.

5. Dispositif de préhension selon une des revendications 1 à 4, caractérisé en ce que la mâchoire de pince (20) présente au moins un dispositif de verrouillage (44) qui tend à maintenir le verrou (36) dans sa position de déblocage.

6. Dispositif de préhension selon une des revendications 1 à 5, caractérisé en ce que la mâchoire de pince (20) comprend au moins un dispositif de verrouillage (48) qui tend à maintenir le verrou (36) dans sa position de blocage.

7. Dispositif de préhension selon une des revendications 1 à 6, caractérisé en ce que le support de mâchoire (70) présente, au-dessus d'une surface réceptrice (72) une plaque de retenue (76) en porte-à-faux, qui s'ajuste dans l'ouverture de passage de verrou (70) et au moyen de laquelle le verrou (36) peut être amené à la position de déblocage.

8. Dispositif de préhension selon la revendication 7, en combinaison avec la revendication 6, caractérisé en ce que la plaque de retenue (76) présente au moins un évidement (78) dans lequel le dispositif de verrouillage (48) associé à la position de blocage du verrou (36) peut se verrouiller lorsque le verrou (36) est poussé dans la position de déblocage.

9. Dispositif de préhension selon la revendication 7 ou 8, caractérisé en ce que le support de mâchoire (70) présente une butée (80) qui fait face à la plaque de retenue (76) et contre laquelle le verrou (36) peut être pressé au droit de sa deuxième surface d'attaque (54) pour être poussé dans la position de blocage.

10. Dispositif de préhension selon la revendication 9, possédant deux mâchoires de pince (20) interchangeables, caractérisé en ce que le réceptacle à pince (70) présente une plaque de retenue (76) qui fait saillie en porte-à-faux des deux côtés et qu'il présente, de chaque côté de cette plaque, une surface réceptrice (72) destinée à recevoir une mâchoire de pince (20) et une butée (80) destinée à arrêter la deuxième surface d'attaque (54) du verrou (36) correspondant.

FIG.1

FIG.2

FIG.3

FIG.4